# EUROPÄISCHE PATENTSCHRIFT

(11) **EP 0 940 661 B1**
(45) Veröffentlichungstag und Bekanntmachung des Hinweises auf die Patenterteilung: **21.06.2006**
(21) Anmeldenummer: 99103562.7
(22) Anmeldetag: 24.02.1999
(51) Int. Cl.: G01K 1/16

(54) **Temperaturfühleranordnung insbesondere für Wärmezähler**
Temperature sensing device in particular for a heat meter
Dispositif capteur de température, en particulier pour un compteur de chaleur

(30) Priorität: 02.03.1998 DE 19808655
(43) Veröffentlichungstag der Anmeldung: 08.09.1999
(73) Patentinhaber: Techem Energy Services GmbH, 65760 Eschborn (DE); JUMO GmbH & Co. KG, 36039 Fulda (DE)
(72) Erfinder: Glaser, Friedrich, 63517 Rodenbach (DE); Heun, Hartmut, 36129 Gersfeld (DE)
(74) Vertreter: KEIL & SCHAAFHAUSEN Patentanwälte

(56) Entgegenhaltungen:
- DE-U- 8 631 832
- DE-U- 29 706 390

## Beschreibung

Die Erfindung betrifft eine Temperaturfühleranordnung, insbesondere für Wärmezähler nach dem Oberbegriff des Anspruchs 1.

Derartige Temperaturfühleranordnungen werden für die Erfassung der in Gebäuderäumen verbrauchten Wärme verwendet, wozu unter anderem Wärmezähler mit zwei Temperaturfühleranordnungen eingesetzt werden. Von diesen Temperaturfühlern wird jeweils einer im Vorlauf bzw. Rücklauf eines Heizungssystems angeordnet, wobei der Temperaturfühler im Rücklauf, vorzugsweise im Wärmezähler, direkt in das die Wärme übertragende Medium eintaucht. Der vorzugsweise für den Vorlauf vorgesehene Temperaturfühler befindet sich nicht immer unmittelbar in dem die Wärme übertragenden Medium, insbesondere heißes Wasser, sondern in einer Schutzhülse, die auch als Tauchhülse bezeichnet wird, die ihrerseits in das Medium eintaucht.

Es ist erforderlich, daß die Temperaturfühler, die einen zylindrischen Abschnitt aufweisen, in dem beispielsweise ein Widerstandsthermometer angeordnet ist, eng innen an der Schutzhülse anliegen, in die sie eingesetzt sind. Nur dann konnte man bisher davon ausgehen, daß eine gute Wärmeleitung von der Schutzhülse zu dem Temperaturfühler erfolgt, der eine Voraussetzung für eine exakte Temperaturmessung und damit genaue Wärmemengenerfassung ist. Der Innendurchmesser der Schutzhülsen und der Außendurchmesser der Temperaturfühler mußten also sehr eng aufeinander abgestimmt sein. Dies erhöht den Herstellungsaufwand, zumal es Temperaturfühler mit verschiedenen Außendurchmessern gibt, zu denen korrespondierende Schutzhülsen gehören. Diese notwendige enge Abstimmung der Abmessungen der Temperaturfühler auf diejenigen der Schutzhülsen machte es in den Fällen, in denen ein betriebsmäßig eingebauter Wärmezähler ausgetauscht werden musste, oft auch erforderlich, die zugehörige Schutzhülse zu tauschen. Dies führte zu einem erheblichen Aufwand, da vor der Demontage einer Schutzhülse aus dem Kreislauf des wärmeübertragenden Mediums dieses abgelassen werden musste, und das Medium nach Montage der neuen Schutzhülse wieder eingefüllt werden muss. Deswegen bestand der Wunsch, in der Weise zwischen den Temperaturfühlern und Schutzhülsen kompatibel zu sein, dass bei einem Austausch des Temperaturfühlers die Schutzhülse montiert bleiben kann und der Temperaturfühler unter guter Passung in die verbleibenden Schutzhülsen eingesetzt werden kann. Um diese Kompatibilität zu erreichen, ist es bekannt, zwischen einem Temperaturfühler und einer Schutzhülse, in welchen der Temperaturfühler eingesetzt wird, einen zusätzlichen rohrförmigen Adapter einzufügen. Der rohrförmige Adapter hat jedoch den Nachteil, dass jetzt noch ein zusätzliches Teil eng toleriert auf die Temperaturfühler und die Schutzhülsen abzustimmen ist, mit denen er kombiniert werden soll. Außerdem ist trotz des Adapters nicht jeder Temperaturfühler, der beispielsweise einen Außendurchmesser in dem Bereich zwischen 5 mm bis 6 mm aufweisen kann, mit jeder Schutzhülse kombinierbar.

Aus der den Oberbegriff des Anspruchs 1 bildenden Druckschrift DE 297 06 390 U1 ist ein Halter für einen Temperaturfühler bekannt, der den Fühlerkopf mittels an dem Halter angeordneten Federelementen gegen die Innenwand der Tauchhülse drückt. Hierdurch wird der wärmeleitende Kontakt zwischen Temperaturfühler und Tauchhülse direkt hergestellt. Um für eine Verwendung für Fühlerköpfe mit unterschiedlichen Durchmessern geeignet zu sein, besitzt der bekannte Halter unterschiedlich weit vorspringende Federelemente. Mittels dieser wird der Temperaturfühler exzentrisch gegen die Innenwand der Schutzhülse gepresst, so dass der wärmeleitende Kontakt direkt zwischen Temperaturfühler und Tauchhülse hergestellt wird.

Der Druckschrift DE 86 31 832 U1 ist eine Tauchhülse mit einem Thermofühler zu entnehmen. Die Tauchhülse besteht aus einem Kopfstück mit einem am unteren Ende verschlossenen Tauchrohr, in dem der Fühler mit seiner Kabelführung angeordnet ist. Längs im Tauchrohr erstreckt sich ein Federblatt wobei zwischen dem Federblatt und der Tauchrohrinnenwand der bzw. die Fühler verspannt worden sind. Durch diese Gestaltung der Tauchhülse wird der Kontakt zwischen Messfühler und Wand der Tauchhülse ("Wandkontakt") über die gesamte Länge (des oder der Messfühler) erreicht, so dass die Temperatur möglichst verzögerungslos erfühlt werden kann. Der Wärmekontakt wird demnach zwischen Messfühler und Innenwand der Tauchhülse direkt hergestellt.

Der vorliegenden Erfindung liegt daher die Aufgabe zugrunde, eine Wärmebrücke zum Einsatz zwischen Temperaturfühler und einer diesen aufnehmenden Schutzhülse zu schaffen, die nicht eng toleriert zu sein braucht und die geeignet ist, Temperaturfühler mit unterschiedlichen Außendurchmessern mit einer vorgegebenen Schutzhülse zu kombinieren. Eine solche Wärmebrücke hat auch die Wirkung eines Adapters.

Diese Aufgabe wird durch eine Wärmebrücke mit den Merkmalen des Anspruchs 1 gelöst.

Mit dieser Ausbildung der Wärmebrücke wird von einem im wesentlichen starren Element mit eng zu tolerierenden Abmessungen abgegangen und eine Wärmebrücke geschaffen, die sich in weitem Maße selbsttätig an unterschiedliche Abstände zwischen dem Außendurchmesser des wesentlichen, in die Schutzhülse eingesetzten Abschnitts des Temperaturfühlers und dem Innendurchmesser der Schutzhülse anpassen kann. Es ist dabei nicht erforderlich, dass der genannte wesentliche Abschnitt des Temperaturfühlers exakt konzentrisch in der zugehörigen Schutzhülse sitzt. Trotzdem ist ein guter Wärmeübergang zwischen der Schutzhülse und dem Temperaturfühler über die Wärmebrücke gewährleistet. Da die Abmessungen der Wärmebrücke nicht eng toleriert einzuhalten sind, ergeben sich auch herstellungsmäßige Vorteile.

Die erfindungsgemäße Temperaturfühleranordnung weist dabei eine Wärmebrücke auf, die aus mindestens einer Blechlamelle, nämlich einer streifenförmigen Blechlamelle besteht, die am einen Ende mit dem Boden des Temperaturfühlers verbunden ist und sich mit dem restlichen Teil seiner Länge parallel zur Achse der Schutzhülsen in einen Spalt zwischen Temperaturfühler und Schutzhülse erstreckt.
Der Temperaturfühler stützt sich auf der der Wärmebrücke gegenüberliegenden Seite unter der Federwirkung der Blechlamelle an der Innenwand der Schutzhülse wärmeleitend ab.

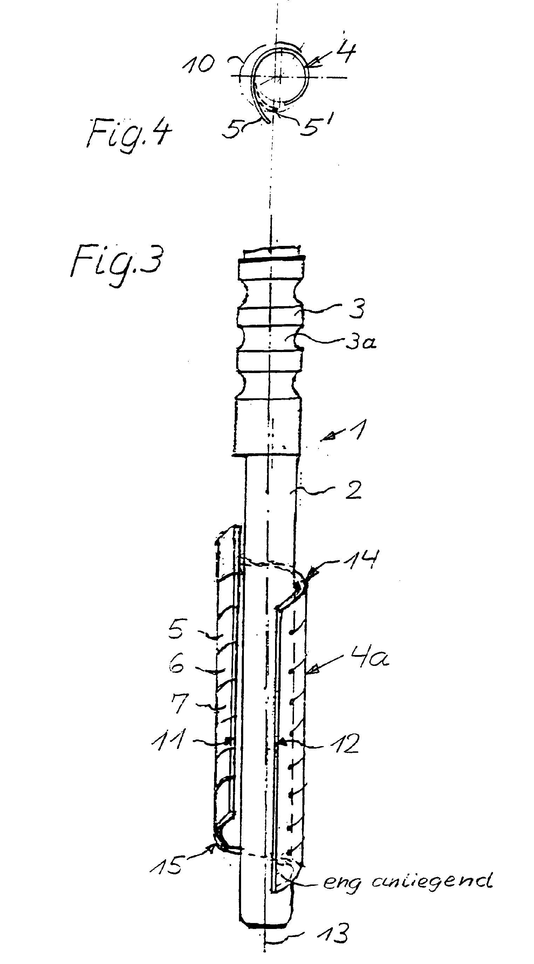

Bei dem Gegenstand nach den Fig. 3 bis 5 ist die Wärmebrücke aus einem Blech als hülsenförmiges federndes Teil mit annähernd spiralförmigem Querschnitt geformt. Beim Einsatz des Temperaturfühlers mit aufgesteckter Wärmebrücke in die Schutzhülse wird die Wärmebrücke zwangsläufig mehr oder weniger zusammengedrückt, wobei sie mit ihrem engeren Innenteil an dem Temperaturfühler und ihrem weiteren Außenteil innen an die Schutzhülse drückt. Durch diese federnde Ausbildung der Wärmebrücke kann der Temperaturfühler einerseits noch genügend leicht in die Schutzhülse eingeschoben werden, andererseits ist der gewünschte gute Wärmeübergang zwischen Schutzhülse und Temperturfühler sicher gegeben.

Ein zuverlässiger Wärmeübergang zwischen Schutzhülse und Temperaturfühler wird weiter dadurch gefördert, daß in das Blech des hülsenförmigen Teils eine Vielzahl von Zungen eingeschnitten sind, die im wesentlichen in Umfangsrichtung des hülsenförmigen Teils verlaufen und nach außen frei enden. Bei dieser Ausbildung des hülsenförmigen Teils kann die Federkraft, mit welcher die Wärmebrücke innen an die Schutzhülse drückt, verhältnismäßig niedrig sein, da jede einzelne Zunge eng an der Schutzhülse anliegt und keine Bereiche bevorzugter oder schwacher Anlage entstehen.

In der Variante, in der die Verwendung des Temperaturfühlers als sogenannter freier Temperaturfühler, der unmittelbar in das die Wärme übertragende Medium eintaucht, gewünscht wird, ist die Wärmebrücke einfach auf den Temperaturfühler lösbar aufgeschoben.

Wenn hingegen ein solcher freier Einsatz des Temperaturfühlers nicht beabsichtigt ist, wird die Wärmebrücke vorzugsweise mit dem Temperaturfühler fest wärmeleitend verbunden. Hierzu kann besonders vorteilhaft die Wärmebrücke mittels eines Schweißpunkts an dem Temperaturfühler befestigt sein.

Weitere zweckmäßige Formmerkmale des Temperaturfühlers ergeben sich aus den übrigen Unteransprüchen.

Der zu der Temperaturfühleranordnung gehörende Temperaturfühler ist besonders zweckmäßig so ausgebildet, daß im wesentlichen der Abschnitt des zylindrischen Temperaturfühlers, der von der Wärmebrücke umgeben wird, gegenüber einem weiteren Abschnitt an einem Kopfende des Temperaturfühlers exzentrisch ist.

Ein bevorzugtes Ausführungsbeispiele der Erfindung wird im folgenden anhand der Fig. 1 bis 5 erläutert.
Es zeigen:
- Fig. 1: eine Seitenansicht des erfindungsgemäßen, einbaufertigen Temperaturfühlers mit einer Wärmebrücke in Form einer an dessen Boden angelöteten oder angeschweißten Blechlamelle in stark vergrößertem Maßstab;
- Fig. 2: den Temperaturfühler nach Fig. 1 in einem in die Schutzhülse und in einer Armatur eingebautem Zustand;
- Fig. 3: eine Seitenansicht eines einbaufertigen Temperaturfühlers mit einer Wärmebrücke in Form eines auf diesen aufgeschobenen hülsenförmigen und spiralförmigen gebogenen Federteils in stark vergrößertem Maßstab;
- Fig. 4: eine axiale Ansicht des Temperaturfühlers nach Fig. 3 und
- Fig. 5: den Temperaturfühler nach den Fig. 3 und 4 in einem in die Schutzhülse und in eine Armatur eingebautem Zustand analog Fig. 2.

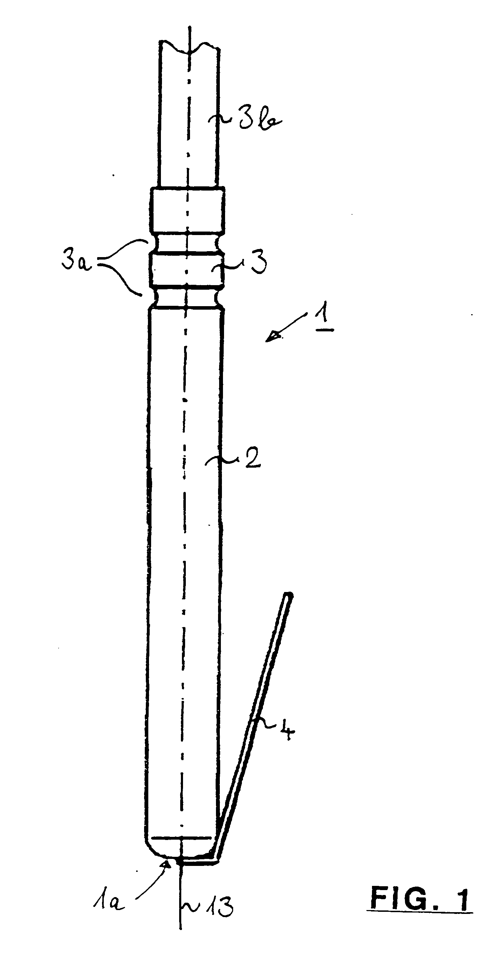

In Fig. 1 ist ein Temperaturfühler 1 gezeigt, der einen zylindrischen Abschnitt 2 und einen weiteren Abschnitt 3 mit Rollungen 3a am Kopfende umfasst, aus dem eine Anschlussleitung 3b herausgeführt ist. Der Temperaturfühler 1 besitzt einen Boden 1a, an den eine Wärmebrücke 4 in Form einer Blechlamelle angelötet oder angeschweißt ist.

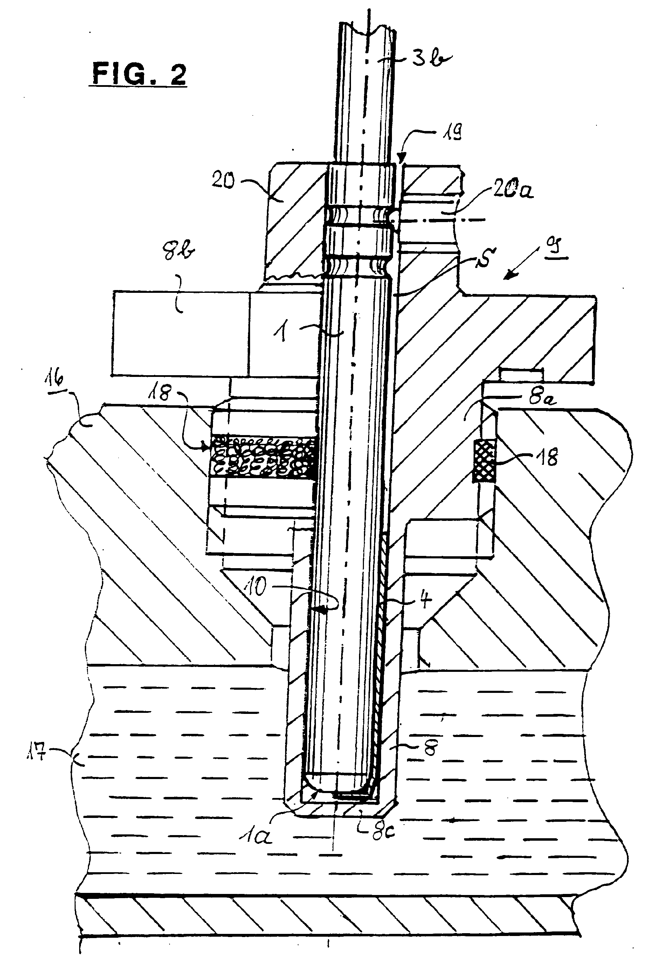

Fig. 2 zeigt den Einbau in eine Armatur 16, die das zu messende Medium 17 führt. In dieses taucht ein rohrförmiger Abschnitt 8 einer Schutzhülse 9 ein, die sich nach oben hin in einem Dichtungskragen 8a mit einer Dichtung 18 und einem Sechskant 8b fortsetzt. An dieses wiederum schließt sich nach oben hin ein Kopfende 20 mit einer Klemmschraube 20a an, die in eine der Rollungen 3a eingreift. Eine zylindrische Bohrung 19 führt durchgehend vom Kopfende 20 bis zum unteren Ende des Abschnitts 8, das durch einen Boden 8c verschlossen ist.

Aus Fig. 2 ist ersichtlich, daß sich die Wärmebrücke 4 nach elastischer Verformung an eine Innenwand 10 der Schutzhülse 9 anlegt. Die Reaktionskraft drückt den Temperaturfühler 1 an den der Wärmebrücke 4 gegenüberliegenden Bereich der Innenwand 10, wodurch ein mehrfacher und inniger Wärmekontakt gebildet wird.

In Fig. 3 ist ein Temperaturfühler gleichfalls generell mit 1 bezeichnet, der einen zylindrischen Abschnitt 2 und einen weiteren Abschnitt 3 mit Rollungen 3a an einem Kopfende umfaßt. Dabei ist der zylindrische Abschnitt 2 gegenüber dem weiteren Abschnitt 3 exzentrisch angeordnet.

An dem zylindrischen Abschnitt 2 des Temperaturfühlers 1 ist eine Wärmebrücke angebracht, die allgemein mit 4a bezeichnet ist. Diese Wärmebrücke besteht aus einem Blech und ist federnd ausgebildet. Hierzu sind in das Blech eine Vielzahl Zungen eingeschnitten, von denen einige mit 5, 6 und 7 bezeichnet sind. Die Zungen enden frei nach außen.

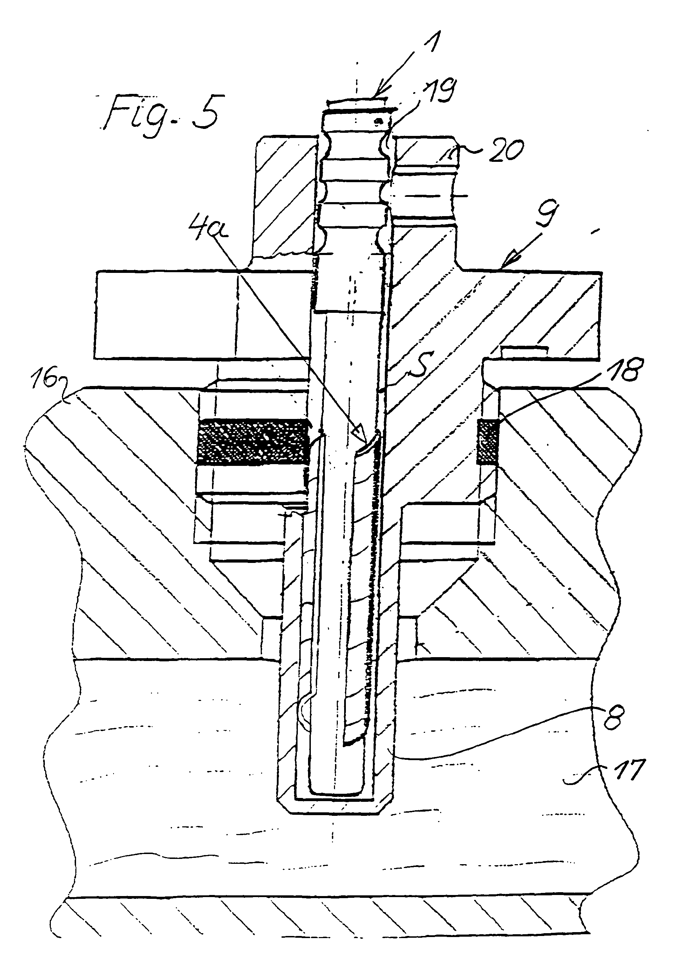

Wie insbesondere aus Fig. 4 ersehen werden kann, ist die Wärmebrücke 4a als hülsenförmiges Teil mit annähernd spiralförmigem Querschnitt geformt, welches also längs des Umfangs einen variablen Radius zu einem - nicht hervorgehobenen - Mittelpunkt aufweist, in dem in Fig. 4 von oben betrachtet die Längsachse 13 des zylindrischen Abschnitts 2 des Temperaturfühlers 1 liegt. Durch die exzentrische Anordnung des zylindrischen Abschnitts 2 hat das hülsenförmige Teil der Wärmebrücke 4a genügend Raum, in dem sich die Zungen, z.B. 5 - 7, federnd bewegen können, um innen an einem rohrförmigen Abschnitt 8 einer Schutzhülse 9 anzuliegen, siehe auch Fig. 5. In Fig. 4 und 5 ist eine Innenwand, gegen welche die Zungen, z.B. 5 - 7 der Wärmebrücke 4a fest und gleichmäßig angedrückt werden, mit 10 bezeichnet. Die Lage der Zungen, beispielsweise 5, an der Innenwand 10 ist in Fig. 4 mit unterbrochenen Linien bei der Position 5' angedeutet.

Aus Fig. 3 kann weiterhin ersehen werden, dass das hülsenförmige Teil der Wärmebrücke 4a zwei Längskanten 11, 12 aufweist, die parallel zueinander und zu einer Hauptlängsachse 13 verlaufen. Eine obere Kante 14 und eine untere Kante 15 des hülsenförmigen Teils des Adapters 4 verlaufen auch in ihrer Höhenlage annähernd spiralförmig.

Aus Fig. 5 kann entnommen werden, wie der Temperaturfühler 1 zusammen mit seiner Wärmebrücke 4a in die Schutzhülse 9 eingesetzt ist die in ihrer Einbaulage in einer Armatur 16 gezeigt ist, welche das wärmeleitende Medium 17 führt. Dabei taucht der rohrförmige Abschnitt 8 der Schutzhülse 9 in das Medium. Die Schutzhülse 9 ist nach außen mittels eines Dichtrings 18 abgedichtet. Eine Bohrung 19 in einem Kopfende 20 der Schutzhülse erstreckt sich durchgehend bis zu dem rohrförmigen Abschnitt 8. Aus Fig. 5 kann wiederum ersehen werden, wie ein äußerer Bereich der Wärmebrücke 4a von innen an den rohrförmigen Abschnitt 8 der Schutzhülse 9 gedrückt wird. Trotzdem lässt sich der Temperaturfühler 1 zusammen mit dieser Wärmebrücke 4a leicht austauschen, wobei die Schutzhülse 9 in ihrer abdichtenden Einbaulage verbleiben kann.

Die anhand der Fig. 3 bis 5 beschriebene Temperaturfühleranordnung, insbesondere für Wärmezähler weist einen in einer Schutzhülse einführbaren, im wesentlichen zylindrischen Temperaturfühler mit einem geschlossenen Boden, und mit einer zwischen der Schutzhülse und dem Temperaturfühler angeordneten Wärmebrücke auf, die als in radialer Richtung elastisches Federteil ausgebildet ist und sich einerseits am Temperaturfühler und andererseits an der Schutzhülse abstützt, wobei die Wärmebrücke als aufgebogenes hülsenförmiges Federteil aus einem Blech mit annähernd spiralförmigem Querschnitt geformt ist und wobei im Blech durch Einschnitte Zungen ausgebildet sind, die im wesentlichen in Umfangsrichtung des Temperaturfühlers verlaufen und nach außen frei enden. Die Wärmebrücke drückt mit ihrem engeren Innenteil des spiralförmigen Querschnitts an den Temperaturfühler und mit ihrem weiteren Außenteil mit den frei endenden Zungen an die Schutzhülse. Die Wärmebrücke weist zwei Längskanten auf, die im wesentlichen parallel zu einer Hauptlängsachse des Temperaturfühlers orientiert sind, sowie eine obere Kante und eine untere Kante auf, die in ihrer Höhenlage annähernd schraubenlinienförmig verlaufen derart, dass der Temperaturfühler mit der Wärmebrücke widerstandsarm in die Schutzhülse einschiebbar ist.

### Bezugszeichen-Liste:

- 1: Temperaturfühler
- 1a: Boden
- 2: zylindrischer Abschnitt
- 3: weiterer Abschnitt
- 3a: Rollungen
- 3b: Anschlußleitung
- 4: Wärmebrücke
- 4a: Wärmebrücke
- 5: Zunge
- 5': Position
- 6: Zunge
- 7: Zunge
- 8: rohrförmiger Abschnitt
- 8a: Dichtungskragen
- 8b: Sechskant
- 8c: Boden
- 9: Schutzhülse
- 10: Innenwand
- 11: Längskante
- 12: Längskante
- 13: Hauptlängsachse
- 14: obere Kante
- 15: untere Kante
- 16: Armatur
- 17: zu messenges Medium
- 18: Dichtung
- 19: zylindrische Bohrung
- 20: Kopfende
- 20a: Klemmschraube

## Patentansprüche

1. Temperaturfühleranordnung, insbesondere für Wärmezähler, mit einem in eine Schutzhülse (9) einführbaren, im wesentlichen zylindrischen Temperaturfühler (1) mit einem geschlossenen Boden (1 a), und mit einer zwischen der Schutzhülse (9) und dem Temperaturfühler (1) angeordneten Element (4), das als in radialer Richtung elastisches Federteil ausgebildet ist und sich einerseits am Temperaturfühler (1) und andererseits an der Schutzhülse (9) abstützt, **dadurch gekennzeichnet, dass** das Element (4) als Wärmebrücke ausgebildet ist und aus einer streifenförmigen, nach elastischer Verformung in ihrer Anordnungsposition L-förmig gebogenen Blechlamelle besteht, deren kurzer Schenkel sich unter den geschlossenen Temperaturfühlerboden (1a) legt und die sich mit ihrem längeren Schenkel parallel zur Achse der Schutzhülse (9) in einen Spalt zwischen Temperaturfühler (1) und Schutzhülse (9) erstreckt und an die Innenwand (10) der Schutzhülse (9) anlegt.

2. Temperaturfühleranordnung nach Anspruch 1, **dadurch gekennzeichnet dass** sich der Temperaturfühler (1) auf der der Wärmebrücke (4) gegenüberliegenden Seite unter der Federwirkung der Blechlamelle an der Innenwand (10) der Schutzhülse (9) wärmeleitend abstützt.

3. Temperaturfühleranordnung nach mindestens einem der Ansprüche 1 oder 2. **dadurch gekennzeichnet, dass** die Wärmebrücke (4) lösbar auf dem Temperaturfühler (1) aufgeschoben ist.

4. Temperaturfühleranordnung nach mindestens einem der Ansprüche 1 oder 2, **dadurch gekennzeichnet, dass** die Wärmebrücke (4) mit dem Temperaturfühler (1) fest wärmeleitend verbunden ist.

5. Temperaturfühleranordnung nach mindestens einem der Ansprüche 1, 2 oder 4, **dadurch gekennzeichnet, dass** die Wärmebrücke (4) mittels eines Fügevorgangs wie Schweißen, Löten, Kleben an dem Temperaturfühler (1) befestigt ist.

6. Tamperaturfühleranordnung nach mindestens einem der Ansprüche 1 bis 5, **dadurch gekennzeichnet, dass** ein im wesentlichen zylindrischer Abschnitt (2) des Temperaturfühlers (1), der von der Wärmebrücke (4) umgeben ist, gegenüber einem weiteren Abschnitt (3) an einem Kopfende des Temperaturfühlers (1) exzentrisch ist.

## Claims

1. A temperature sensing arrangement, in particular for heat meters, comprising a substantially cylindrical temperature sensor (1) adapted to be introduced into a protective sleeve (9) and provided with a closed bottom (1a), and comprising an element (4) arranged between the protective sleeve (9) and the temperature sensor (1) and formed as a spring part flexible in the radial direction and supported, on the one hand, on the temperature sensor (1) and, on the other hand, on the protective sleeve (9), **characterized in that** the element (4) is configured as a thermal bridge and formed of a strip-type laminated sheet which after a flexible deformation, in the position of arrangement, is of an L-shaped bending, with the short leg thereof placing itself underneath the closed bottom (1 a) of the temperature sensor and with the large leg thereof extending in parallel to the axis of the protective sleeve (9) within a gap between temperature sensor (1) and protective sleeve (9) and being in abutment with the internal wall (10) of the protective sleeve (9).

2. A temperature sensing arrangement according to claim 1, **characterized in that** the temperature sensor (1) on the side opposite the thermal bridge (4), under the effect of the laminated sheet, is supported on the internal wall (10) of the protective sleeve (9) in a heat-conductive manner.

3. A temperature sensing arrangement according to at least one of claims 1 or 2, **characterized in that** the thermal bridge (4) is detachably pushed onto the temperature sensor (1).

4. A temperature sensing arrangement according to at least one of claims 1 or 2, **characterized in that** the thermal bridge (4) is rigidly connected, in a heat-conductive way, to the temperature sensor (1).

5. A temperature sensing arrangement according to at least one of claims 1, 2, or 4. **characterized in that** the thermal bridge (4), by means of a joining operation, such as welding, soldering, or cementing is fixed to the temperature sensor (1).

6. A temperature sensing arrangement according to at least one of claims 1 through 5, **characterized in that** a substantially cylindrical section (2) of the temperature sensor (1) surrounded by the thermal bridge (4) is offset vis-à-vis another section (3) at the top end of the temperature sensor (1).

## Revendications

1. Ensemble de palpeur de température, en particulier pour des calorimètres, comportant un palpeur de température (1) essentiellement sous forme cylindrique introduit dans une douille de protection, prévu d'un fond (1a) fermé, et comportant un élément (4) disposé entre la douille de protection et le palpeur de température (1) formé comme élément de ressort élastique dans la direction radiale et étant supporté d'une part au palpeur de température (1) et d'autre part à la douille de protection (9), **caractérisé en ce que** l'élément (4) est sous forme d'un pont thermique, consistant d'une tôle lamellée en bande courbé sous forme de la lettre L dans sa position de disposition après la déformation élastique, côté court de la tôle lamellée se posant sous le fond du palpeur (1 a) fermé et le côté long s'étendant en parallèle à l'axe de la douille de protection (9) dans une fente entre le palpeur de température (1) et la douille de protection (9) en se mettant contre la paroi interne de la douille de protection (9).

2. Ensemble de palpeur de température selon la revendication 1, **caractérisé en ce que** le palpeur de température (1) au côté opposé du pont thermique (4) sous l'effet du ressort de la tôle lamellée se supporte sur la paroi interne de la douille de protection (9) de manière conductrice de la chaleur.

3. Ensemble de palpeur de température selon au moins l'une des revendications 1 ou 2, **caractérisé en ce que** le pont thermique (4) est poussé de manière détachable sur le palpeur de température (1).

4. Ensemble de palpeur de température selon au moins l'une des revendications 1 ou 2, **caractérisé en ce que** le pont thermique (4) est fermement relié, de manière conductrice de la chaleur, au palpeur de température (1).

5. Ensemble de palpeur de température selon au moins l'une des revendications 1, 2 ou 4, **caractérisé en ce que** le pont thermique (4) est fixé par l'intermédiaire d'une opération à joindre, comme souder, braser ou coller, au palpeur de température (1).

6. Ensemble de palpeur de température selon au moins l'une des revendications 1 à 5, **caractérisé en ce qu'**une section du palpeur de température (1) essentiellement cylindrique entourée par le pont thermique (4) est monté excentriquement vis-à-vis une autre section (3) à une extrémité supérieure du palpeur de température (1).
